# EUROPEAN PATENT SPECIFICATION

(11) **EP 0 608 031 B1**
(45) Date of publication and mention of the grant of the patent: **29.05.1996**
(21) Application number: 94200115.7
(22) Date of filing: 18.01.1994
(51) Int. Cl.: A21D 13/00, B65D 65/46, A21D 2/14, A21D 2/18

(54) **A process for manufacturing mouldings on the basis of a starch product, as well as a mixture in powdered form to be used therein**
Verfahren zur Herstellung von Formkörpern auf Basis von einem Stärkeprodukt, sowie eine pulverförmige Mischung zur Verwendung darin
Un procédé de fabrication des pièces moulées à base d'un produit d'amidon, et un mélange pulverulent ainsi utilisé

(30) Priority: 19.01.1993 NL 9300102
(43) Date of publication of application: 27.07.1994
(73) Proprietor: Coöperatieve Verkoop- en Productievereniging van Aardappelmeel en Derivaten 'AVEBE' B.A., NL-9641 JA Veendam (NL)
(72) Inventor: van der Zon, Johannes Cornelus Leonardus, NL-5741 MD Beek en Donk (NL); Meijer, Henk Jaap, NL-9731 DA Groningen (NL)
(74) Representative: Smulders, Theodorus A.H.J., Ir.

(56) References cited:
- WO-A-89/02225
- WO-A-91/12186
- FR-A- 2 642 731

## Description

This invention relates to a process for manufacturing mouldings, which comprises preparing a dough on the basis of a starch product and bringing the dough into the desired form and baking it.

WO 91/12186 discloses a process for manufacturing biodegradable thin-walled mouldings, which comprises forming an aqueous mixture with starch and a separating agent as essential components, baking the aqueous mixture in a mould and conditioning the baked moulding to a moisture content of 6-22 wt.%, so as to obtain the desired tough and firm texture. The separating agent used is a medium or long-chain fatty acid or a derivative thereof, e.g. a fatty amide. These may be used together with polymethyl hydrogen siloxanes which, in some cases, may completely replace the fatty acid or derivative thereof. The aqueous starting mixture may further contain innumerable other auxiliary agents, such as thickeners, fillers, hygroscopic agents, colorants etc. For strengthening the structure a zirconium salt solution may be used. When carrying out this known process in practice, great problems arise, because it is difficult to prepare a starting mixture which is homogeneous and also remains homogeneous and which, moreover, can be easily transported. Besides, this known process is laborious, because an additional treatment must always be carried out at the end, namely the above-mentioned conditioning of the baked moulding.

Furthermore, NL-A-9100590 discloses a process for manufacturing an ecologically sound packing by forming a dough from potato flour, a minor amount of cereal flour, edible oil and conventional additives, including stabilizers and emulsifiers, with water, bringing the dough into a pressing mould and heating the dough in the baking mould, after which it is cooled slowly. The edible oil referred to is sunflower oil and soybean oil. Little information is provided about the stabilizers to be used. According to the examples Keltron F is used. Finally, the structure of the dough can be improved by adding a salt. Although it is stated that packings thus made possess moisture-repellent properties and are properly resistant to liquids, the watertightness and especially the mechanical strength of the products obtained are inadequate for numerous important uses, such as for dishes, goblets, flowerpots etc.

The object of the invention is to provide a simply and properly controlled process for manufacturing mouldings as defined in the opening paragraph.

It is another object of the invention to manufacture mouldings that are properly resistant to the action of moisture and water and, moreover, possess a great mechanical strength.

It is yet another object of the invention to obtain mouldings that are biodegradable or compostable, after which, besides useful decomposition products, only innocuous residual materials are left.

To attain the above-described objects, mouldings are manufactured according to the invention by mixing with water 500-1500 parts by weight of starch or starch derivative, 0.5-50 parts by weight of xanthan gum, 5-250 parts by weight of a reactive siloxane and 25-300 parts by weight of an inert filler to obtain a homogeneous dough, placing the dough in a baking mould and baking it and removing the baked moulding from the baking mould. Preferably, 0.5-50 parts by weight of a salt are incorporated in the above mixture, because this ensures that fluctuations in the hardness of the water used will have hardly any effect on the viscosity of the dough. The indicated weight parts are based on dry substance.

The invention also relates to a mixture in powdered form to be used when carrying out the above-described process. This mixture contains 500-1500 parts by weight of starch or starch derivative, 0.5-50 parts by weight of xanthan gum and 25-300 parts by weight of an inert filler. The powdered mixture preferably also contains 0.5-50 parts by weight of a salt. A mixture thus composed can be simply processed with the appropriate amounts of water and reactive siloxane to obtain a dough from which the present mouldings can be baked.

The most conspicuous advantages of the present process over the earlier discussed prior art are a greater simplicity and reliability in carrying out the process and in obtaining mouldings that are less susceptible to the action of water or moisture and possess a greater mechanical strength.

The starch to be used according to the invention may be native starch, e.g. potato starch, maize starch, wheat starch, waxy maize starch, tapioca starch, pea starch, high-amylose starch or rice starch. Preferably, however, potato starch is used the amylopectin content of which may vary from 75 to 100%. Also starch derivatives may be used, e.g. starch modified by etherification, esterification, acid hydrolysis, oxidation, crosslinking and/or the action of enzymes. Of the starch or starch derivative, preferably 800-1200 parts by weight are processed in the dough in relation to the other components.

In the present dough are incorporated 0.5-50 and preferably 1-5 parts by weight of xanthan gum. Xanthan gum is a polysaccharide built up from mannose, glucose and glucuronic acid (sodium, potassium and calcium salts) and capable of being recovered by fermentation from a culture of *Xanthomonas campestris*. In the present use, xanthan gum performs a number of very important functions; for Xanthan gum ensures that the granules of the starch (derivative) are properly kept in suspension in the dough. In other words, the gum prevents these granules from sagging during the preparation and storage of the dough. The xanthan gum thus ensures that a homogeneous and stable dough is obtained. Besides, the xanthan gum imparts pseudoplastic properties to the dough, so that the dough can be easily transported, e.g. can be pumped to the baking device via pipelines. Finally, the xanthan gum produces a moisture-regulating effect on the baked moulding, so that the latter need not be conditioned, which, however, must be done with the mouldings manufactured by the process of the earlier discussed patent application WO 91/12186.

A further essential component in carrying out the present process is a reactive siloxane, preferably a polyalkyl hydrogen siloxane, such as polymethyl hydrogen siloxane. Such siloxanes are commercially available under the names of Silicones HY (BRB, Ittervoort, The Netherlands), Dow Corning 1107 liquid and Q2-7083 emulsion (Dow Corning Europe) and Silbione (Rhône Poulenc; Heybroek, Amsterdam). The siloxane suppresses foam formation in the preparation of the dough and reacts at the baking temperature with hydroxyl groups of the starch (derivative) to form a network structure, resulting in a skeleton having a greater watertightness, the more so as also some hydrophobing of the starch surface takes place. The reactive siloxane also promotes easy removal of the baked moulding from the baking mould. In the dough 5-250 parts by weight and preferably 5-50 parts by weight of the reactive siloxane are incorporated.

Furthermore, an inert filler is processed in the dough. The inert filler may be any granular or powdered inorganic material, such as sand, chalk, clay, talcum and the like, but also organic material may be used, such as potato fibres, carbon fibres, wood fibres or wood chips. The particle size may alternate, partly depending on the contemplated use of the moulding. The inert filler performs an important function which is partly connected with the use of a reactive siloxane; for during baking the latter reacts with the starch product used and/or with the water, so that not only water vapour but also hydrogen gas is released. Both water vapour and hydrogen gas function as a blowing agent to form a porous structure. Using an inert filler prevents an unduly porous structure from being formed, which would have a negative effect on the strength of the mouldings.

When carrying out the present process in practice, it is very useful to process an innocuous salt in the dough; for it has been found that the consistency or the quality of the dough to be formed is susceptible to fluctuations in the hardness of the water, e.g. mains water, used for mixing the dough. By processing even a relatively small amount of salt in the dough this susceptibleness can be eliminated and a high-grade homogeneous dough can be easily and reliably prepared, irrespective of the hardness of the water used. Suitable salts are, e.g., sodium chloride, secondary alkali metal phosphates and soluble calcium salts, especially pentacalcium hydroxyl orthophosphate (hydroxylapatite). The added amount of salt is normally 0.5-50 parts by weight and preferably only 1-5 parts by weight.

Further additives may be incorporated in the dough according to the need. Preferably, natural additives are used which are biodegradable while forming useful or, anyhow, innocuous residual materials, or additives that are innocuous by themselves, e.g. inert additives. The additives to be mentioned are: biodegradable, natural or synthetic polymers, such as guar, proteins, gum arabic and pectins; plasticizers, such as glycerol, polyethylene glycol and polypropylene glycol; colorants or pigments, preferably selected from those which are admitted for use in foods; flavourings; emulsifiers; catalysts for promoting the reactivity of the siloxane, such as metal soaps; antioxidants etc. Also additives having a moisture-regulating effect on the final product, such as cellulose fibres or potato fibres can be used, if desired. These additional additives are used in amounts that can be easily determined by those skilled in the art.

The present dough can be prepared by mixing the different components with the required amount of water to obtain a homogeneous dough having the desired consistency. Normally, related to the above amounts of the other components, 500-1500 parts by weight of water are used. Preferably, 800-1200 parts by weight of water are used. Depending on the specific components used and further depending on the moulding one wishes to make and on the type of baking device, those skilled in the art can easily determine which amounts of the different components lead to obtaining a dough of optimum grade. Often a dough is prepared the apparent viscosity of which, determined according to Brookfield LVF, ranges from 500 to 3000 mPa.s.

For the preparation of the present dough the different components, including the water, can be combined and mixed in any mixer of a suitable type, e.g. a Hobart mixer, until a homogeneous dough has been obtained, Normally, the reactive siloxane is first mixed with water and the other components are then added in any order. The starting mixture may also be a powdered mixture (a premix) containing the starch or starch derivative, the xanthan gum, the inert filler and preferably also the salt in the earlier indicated weight amounts. The invention also relates to such a previously formed mixture in powdered form, which may be prepared in any suitable dry substance mixer and may also contain other desired dry additives. The bulk density of such a powdered mixture normally ranges from 0.70 to 0.90 kg/dm³, preferably from 0.75 to 0.85 kg/dm³. Starting from such a mixture in powdered form, the present dough can be easily prepared by admixing this mixture with the required amount of water and also adding the reactive siloxane, after which the mixing is continued until a homogeneous dough has been obtained.

The dough obtained according to the invention is a stable suspension, by which is meant that it can be stored for a considerable time without sagging of the starch (derivative) or other constituents. If, however, shearing forces are exerted on the dough, e.g. when transporting the dough to the baking device, the dough will become thinner, which facilitates the transport while the homogeneity is preserved notwithstanding.

The required amount of the dough prepared is passed to a baking mould, normally a so-called wafer pressing and baking mould consisting of a lower and an upper mould which together determine the shape, the size and the wall thickness of the moulding to be made. The baking mould is made, e.g., of aluminium, stainless steel, cast iron or brass, and a large number of baking moulds can be mounted on a conveyer belt. The heating can be carried out in any suitable manner, e.g. with gas or electricity. Normally, the baking mould is heated to a temperature of from 150 to 240°C, the time required for baking the moulding "well-done" usually being 45-200 seconds. Preferably, the baking temperature is selected from 160 to 220°C and the baking time is 55-140 seconds. The whole may form part of an automatic wafer baking machine which is additionally provided with a dough supply, a discharge for the baked mouldings, devices for compressed air and for vacuum suction, motors, the necessary regulation, control and safety devices etc.

After the mouldings have been baked, they can be easily removed from the baking mould without sticking thereto. The mouldings normally contain 5-12% water and need, in contrast with the above discussed prior art, not be conditioned or be cooled slowly. Consequently, they can be stacked immediately and made ready for packaging and storing or dispatch. According to the present process mouldings can be manufactured in widely different wall thicknesses. However, the wall thickness preferably ranges from 1 to 5 mm, the preferred thickness in a specific case of course depending on the shape, the size and the contemplated use of the moulding to be made.

According to the invention, various types of mouldings can be made. Examples to be mentioned are: trays, dishes, plates, goblets, flowerpots, packings, CD holders, flat sheets etc. Because of the specific properties of the present mouldings these are particularly eligible for uses in which the strength, the watertightness and/or the biodegradability are important; for the strength and the watertightness are considerably better than in mouldings made without reactive siloxane and inert filler. Yet the present mouldings can be easily composted after use or can be biologically decomposed, after which eventually only useful and innocuous residual materials are left, such as fertilizers, inert fillers, silica etc.

The invention will be illustrated by the following examples.

### Example I

In a Hobart mixer were mixed, with stirring (position 2), 1150 g mains water and 22 g Silicones HY (a reactive polymethyl hydrogen siloxane from the firm of BRB, Ittervoort, The Netherlands). To the mixture were added, with continued stirring (position 2), the following components: 1000 g potato starch, 2 g Kelzan S (xanthan gum from the firm of Danby Chemie, Amsterdam, The Netherlands), 2 g hydroxylapatite (pentacalcium hydroxyl orthophosphate from the firm of Fenninga, Oudewater, The Netherlands), 75 g China clay Spes (ECC International S.A., Visé/Lixhe, Belgium) and 75 g Hydrocarb 90 (chalk from the firm of Boekamp, Gouda, The Netherlands). After all these components had been added, vigorous stirring was effected for 2 more minutes (position 2) to obtain a homogeneous dough. The dough could be easily stored for 1 hour and even longer without sagging of the granular components.

When the dough was stirred and transferred, it was found to become more thin flowing, but it kept its homogeneous consistency notwithstanding. A portion of the dough was placed in a mould of a wafer baking machine and baked therein for 60 seconds at 180°C. Then the tray (wall thickness about 2 mm) was removed from the mould. This could be done very easily without damaging the tray. The tray had a moisture content of about 8-10% and did not need to be conditioned. When compared with a tray that had been manufactured analogously, but without Silicones HY and without a filler (clay and chalk), the present tray was better resistant to water and moisture and possessed a substantially greater mechanical strength.

Because of its above-mentioned properties the tray is very suitable for storing all types of more or less liquid or moist materials, such as foods and moist earth. After use the tray can be easily composted while forming useful organic decomposition materials. Besides, only inert fillers (clay and chalk) are left.

### Example II

In a Hobart mixer were placed 1000 g potato starch, to which were added, with stirring at a low number of revolutions (position 1), successively 2 g Kelzan S, 2 g hydroxylapatite, 75 g China clay Spes and 75 g Hydrocarb 90. After all the components had been added, mixing was effected for 15 minutes (position 1). Then the mixture was transferred to a plastic bag and stored in closed condition.

Thus a commercially available ready-for-use mixture is obtained, which can be added to mains water with Silicones HY, as described in Example I. The dough thus obtained and the tray manufactured with this dough in the manner likewise described in Example I had the same favourable properties as described in Example I.

## Claims

1. A process for manufacturing mouldings, which comprises preparing a dough on the basis of a starch product and bringing the dough into the desired form and baking it, characterized in that 500-1500 parts by weight of starch or starch derivative, 0.5-50 parts by weight of xanthan gum, 5-250 parts by weight of a reactive siloxane and 25-300 parts by weight of an inert filler are mixed with water to obtain a homogeneous dough, said dough is placed in a baking mould and baked and the baked moulding is removed from said baking mould.

2. A process according to claim 1, characterized in that the starch used is potato starch.

3. A process according to claim 1 or 2, characterized in that 800-1200 parts by weight of starch or starch derivative are used.

4. A process according to claims 1-3, characterized in that 1-5 parts by weight of xanthan gum are used.

5. A process according to claims 1-4, characterized in that the siloxane used is a polyalkyl hydrogen siloxane.

6. A process according to claims 1-5, characterized in that 5-50 parts by weight of siloxane are used.

7. A process according to claims 1-6, characterized in that the inert filler used is chalk and/or clay.

8. A process according to claims 1-7, characterized in that 0.5-50 parts by weight of a salt are incorporated in said mixture.

9. A process according to claim 8, characterized in that 1-5 parts by weight of salt are used.

10. A process according to claim 8 or 9, characterized in that the salt used is pentacalcium hydroxyl orthophosphate or a secondary alkali metal phosphate.

11. A process according to claims 1-10, characterized in that according to the need innocuous colorants, plasticizers and/or other auxiliary agents are incorporated in said mixture.

12. A process according to claims 1-11, characterized in that 500-1500 parts by weight of water are used to prepare said dough.

13. A process according to claim 12, characterized in that 800-1200 parts by weight of water are used to prepare said dough.

14. A process according to claims 1-13, characterized in that the different components are used in such amounts that a homogeneous dough is obtained the apparent viscosity of which, determined according to Brookfield LVF, ranges from 500 to 3000 mPa.s.

15. A process according to claims 1-14, characterized in that said dough is baked in said baking mould to obtain mouldings having a wall thickness of from 1 to 5 mm.

16. A process according to claims 1-15, characterized in that said dough is baked in said baking mould for 45-200 seconds at a temperature of from 150 to 240°C.

17. A mixture in powdered form to be used when carrying out the process according to claims 1-16, characterized in that said mixture contains 500-1500 parts by weight of starch or starch derivative, 0.5-50 parts by weight of xanthan gum and 25-300 parts by weight of an inert filler.

18. A mixture according to claim 17, characterized in that said mixture additionally contains 0.5-50 parts by weight of a salt.

## Patentansprüche

1. Verfahren zur Herstellung von Formen, umfassend das Herstellen eines Teigs auf der Basis einer Stärke und Formung des Teigs zu der gewünschten Form und Backen derselben, dadurch gekennzeichnet, daß 500 bis 1000 Gewichtsteile Stärke oder Stärkederivat, 0,5 bis 50 Gewichtsteile Xanthangummi, 5 bis 250 Gewichtsteile eines reaktiven Siloxans und 25 bis 300 Gewichtsteile eines inerten Füllstoffs mit Wasser zum Erhalt eines homogenen Teigs vermischt werden, Eindringen des Teigs in eine Backform, Backen und Entfernen der gebackenen Form aus der Backform.

2. Verfahren nach Anspruch 1, dadurch gekennzeichnet, daß die verwendete Stärke Kartoffelstärke ist.

3. Verfahren nach Anspruch 1 oder 2, dadurch gekennzeichnet, daß 800 bis 1200 Gewichtsteile Stärke oder Stärkederivat verwendet werden.

4. Verfahren nach den Ansprüchen 1 bis 3, dadurch gekennzeichnet, daß 1 bis 5 Gewichtsteile Xanthangummi verwendet werden.

5. Verfahren nach einem der Ansprüche 1 bis 4, dadurch gekennzeichnet, daß das verwendete Siloxan ein Polyalkylhydrogensiloxan ist.

6. Verfahren nach den Ansprüchen 1 bis 5, dadurch gekennzeichnet, daß 5 bis 50 Gewichtsteile Siloxan verwendet werden.

7. Verfahren nach den Ansprüchen 1 bis 6, dadurch gekennzeichnet, daß der verwendete inerte Füllstoff, Kalk und/oder Ton ist.

8. Verfahren nach den Ansprüchen 1 bis 7, dadurch gekennzeichnet, daß 0,5 bis 50 Gewichtsteile eines Salzes in das Gemisch eingebracht werden.

9. Verfahren nach Anspruch 8, dadurch gekennzeichnet, daß 1 bis 5 Gewichtsteile Salz verwendet werden.

10. Verfahren nach Anspruch 8 oder 9, dadurch gekennzeichnet, daß das verwendete Salz Pentacalciumhydroxylorthophosphat oder ein sekundäres Alkalimetallphosphat ist.

11. Verfahren nach den Anspüchen 1 bis 10, dadurch gekennzeichnet, daß erforderlichenfalls impfende Färbemittel, Weichmacher und andere Hilfsmittel in dieses Gemisch eingebracht werden.

12. Verfahren nach den Ansprüchen 1 bis 11, dadurch gekennzeichnet, daß 500 bis 1500 Gewichtsteile Wasser zur Herstellung des Teigs verwendet werden.

13. Verfahren nach Anspruch 12, dadurch gekennzeichnet, daß 800 bis 1200 Gewichtsteile Wasser zur Herstellung des Teigs verwendet werden.

14. Verfahren nach den Ansprüchen 1 bis 13, dadurch gekennzeichnet, daß verschiedene Bestandteile in solchen Mengen verwendet werden, daß ein homogener Teig einer scheinbaren Viskosität erhalten wird, die nach Brookfield LVF gemessen, im Bereich von 500 bis 3000 mPa x s liegt.

15. Verfahren nach den Ansprüchen 1 bis 14, dadurch gekennzeichnet, daß dieser Teig in einer Backform gebacken wird, um Formen mit einer Wanddicke von 1 bis 5 mm zu erhalten.

16. Verfahren nach den Ansprüchen 1 bis 15, dadurch gekennzeichnet, daß die Form in dieser Backform 25 bis 200 Sekunden lang bei einer Temperatur von 150 bis 240°C gebacken wird.

17. Pulverförmiges Gemisch zur Verwendung in einem Verfahren nach den Ansprüchen 1 bis 16, dadurch gekennzeichnet, daß das Gemisch 500 bis 1500 Gewichtsteile Stärke oder Stärkederivat, 0,5 bis 50 Gewichtsteile Xanthangummi und 25 bis 300 Gewichtsteile eines inerten Füllstoffs enthält.

18. Gemisch nach Anspruch 17, dadurch gekennzeichnet, daß das Gemisch zusätzlich 0,5 bis 50 Gewichtsteile eines Salzes enthält.

## Revendications

1. Un procédé pour la fabrication d'articles moulés, qui comporte la préparation d'une pâte à base d'un produit de type amidon après quoi on met la pâte sous la forme souhaitée avant de la faire cuire, caractérisé en ce que de 500 à 1500 parties en poids d'amidon ou de dérivés d'amidon, de 0,5 à 50 parties en poids de gomme de xanthane, de 5 à 250 parties en poids d'un siloxane réactif et de 25 à 300 parties en poids d'une charge inerte sont mélangés avec de l'eau afin d'obtenir une pâte homogène, cette pâte est placée dans un moule de cuisson puis cuite après quoi l'article moulé cuit est prélevé dudit moule de cuisson.

2. Un procédé selon la revendication 1, caractérisé en ce que l'amidon utilisé est un amidon de pomme de terre.

3. Un procédé selon la revendication 1 ou 2, caractérisé en ce que de 800 à 1200 parties en poids d'amidon ou de dérivé d'amidon sont utilisées.

4. Un procédé selon les revendications 1 à 3, caractérisé en ce que de 1 à 5 parties en poids de gomme de xanthane sont utilisées.

5. Un procédé selon les revendications 1 à 4, caractérisé en ce que le siloxane utilisé est un polyalkyl-hydrogéno-siloxane.

6. Un procédé selon les revendications 1 à 5, caractérisé en ce que de 5 à 50 parties en poids de siloxane sont utilisées.

7. Un procédé selon les revendications 1 à 6, caractérisé en ce que la charge inerte utilisée est de la craie et/ou de l'argile.

8. Un procédé selon les revendications 1 à 7, caractérisé en ce que de 0,5 à 50 parties en poids d'un sel sont incorporées dans ledit mélange.

9. Un procédé selon la revendication 8, caractérisé en ce que de 1 à 5 parties en poids de sel sont utilisées.

10. Un procédé selon la revendication 8 ou 9, caractérisé en ce que le sel utilisé est l'hydroxy)orthophosphate de pentacalcium ou bien un phosphate secondaire de métal alcain.

11. Un procédé selon les revendications 1 à 10, caractérisé en ce que selon le besoin, des colorants, des agents plastifiants et/ou d'autres agents auxiliaires, inoffensifs, sont incorporés dans ledit mélange.

12. Un procédé selon les revendications 1 à 11, caractérisé en ce que de 500 à 1500 parties en poids d'eau sont utilisées pour préparer ladite pâte.

13. Un procédé selon la revendication 12, caractérisé en ce que de 800 à 1200 parties en poids d'eau sont utilisées pour préparer ladite pâte.

14. Un procédé selon les revendications 1 à 13, caractérisé enc e que les différents composants sont utilisés en des quantités telles qu'une pâte homogène est obtenue dont la viscosité apparente, déterminée selon la technique Brookfield LVF, se situe dans la gamme de 500 à 3000 mPa.s.

15. Un procédé selon les revendications 1 à 14, caractérisé en ce que ladite pâte est cuite dans ledit moule de cuisson afin d'obtenir des articles moulés présentant une épaisseur de paroi de 1 à 5 mm.

16. Un procédé selon les revendications 1 à 15, caractérisé en ce que ladite pâte est cuite dans ledit moule de cuisson pendant de 45 à 200 secondes à une température de 150 à 240°C.

17. Un mélange sous forme poudreuse destiné à être utilisé lors de la mise en oeuvre du procédé selon les revendications 1 à 16, caractérisé en ce que ledit mélange renferme de 500 à 1500 parties en poids d'amidon ou de dérivé d'amidon, de 0,5 à 50 parties en poids de gomme de xanthane et de 25 à 300 parties en poids d'une charge inerte.

18. Un mélange selon la revendication 17, caractérisé en ce que ledit mélange renferme en outre de 0,5 à 50 parties en poids d'un sel.
